# EUROPÄISCHE PATENTANMELDUNG

(11) **EP 1 104 780 A1**
(43) Veröffentlichungstag der Anmeldung: **06.06.2001**
(21) Anmeldenummer: 00122275.1
(22) Anmeldetag: 19.10.2000
(51) Int. Cl.: C08K 5/057, C08K 5/00, C08L 83/04

(54) **Vernetzbare Organopolysiloxanmassen**

(30) Priorität: 29.11.1999 DE 19957336
(71) Anmelder: Wacker-Chemie GmbH, 81737 München (DE)
(72) Erfinder: Ziche, Wolfgang, Dr., 01619 Röderau-Bobersen (DE); Straussberger, Susanne, 84461 Mehring/Öd (DE); Obermeier, Klaus, 84489 Burghausen (DE)
(74) Vertreter: Budczinski, Angelika

(57) **Zusammenfassung**

Unter Ausschluß von Feuchtigkeit lagerfähige und bei Zutritt von Feuchtigkeit bei Raumtemperatur vernetzbare Organopolysiloxanmassen auf der Basis von Organosiliciumverbindungen mit mindestens zwei hydrolysierbaren Gruppen, dadurch gekennzeichnet, daß sie als Katalysator mindestens eine Titanverbindung der Formel

Ti(OR)₄₋ₙ[(OR¹)ₓ-OR²]ₙ (I)

enthalten, wobei
R gleich oder verschieden sein kann und einwertige, gegebenenfalls substituierte Kohlenwasserstoffreste bedeutet,
R¹ gleich oder verschieden sein kann und zweiwertige, gegebenenfalls substituierte Kohlenwasserstoffreste bedeutet,
R² gleich oder verschieden sein kann und eine für R angegebene Bedeutung hat,
n 1, 2, 3 oder 4 ist und
x eine ganze Zahl größer oder gleich 1 ist.

## Beschreibung

Die Erfindung betrifft unter Ausschluß von Feuchtigkeit lagerfähige und bei Zutritt von Feuchtigkeit bei Raumtemperatur vernetzbare Organopolysiloxanmassen unter Verwendung eines Titankatalysators sowie ein Verfahren zur Herstellung derartiger Massen.

Die Verwendung von Titan(IV)verbindungen, besonders der chelatisierten Titanate als Kondensationskatalysatoren in RTV-1-Siliconkautschuken ist allgemein bekannt. In RTV-1-Massen haben diese Titanverbindungen allerdings den Nachteil, daß sie eine unerwünschte Gelbfärbung der Kautschuke bewirken, und somit nur gedeckte, aber keine transluzenten Massen möglich sind. Zur Verringerung der Gelbfärbung wurden daher zahlreiche Methoden entwickelt, wie etwa Zusätze, die die Gelbfärbung unterbinden, wie z.B. in US-A 4,906,719 offenbart, die Verwendung von Phosphatotitanaten in RTV-Isocyanat-Systemen gemäß US-A 4,433,127, der Einsatz von speziellen Titankatalysatoren, die durch Umsetzung von Organotitanaten mit Hydroxycarbonsäureestern hergestellt werden, wie z.B. aus DE 42 13 873 bekannt, spezielle Titankatalysatoren, die durch Umsetzung von Organotitanaten mit einer Beta-Dicarbonylverbindung und zusätzlich mit einem Citronensäureester hergestellt werden, wie z.B. in US-A 5,428,103 offenbart, sowie spezieller Titanate, deren Organylreste nicht nur von einwertigen Alkoholen, sondern auch von Diolen oder Dihydroxycarbonsäuren abgeleitet sind, wie z.B. in DE 44 27 528 A beschrieben.

Gegenstand der Erfindung sind unter Ausschluß von Feuchtigkeit lagerfähige und bei Zutritt von Feuchtigkeit bei Raumtemperatur vernetzbare Organopolysiloxanmassen auf der Basis von Organosiliciumverbindungen mit mindestens zwei hydrolysierbaren Gruppen, dadurch gekennzeichnet, daß sie als Katalysator mindestens eine Titanverbindung der Formel

Ti(OR)₄₋ₙ[(OR¹)ₓ-OR²]ₙ (I)

enthalten, wobei
R gleich oder verschieden sein kann und einwertige, gegebenenfalls substituierte Kohlenwasserstoffreste bedeutet,
R¹ gleich oder verschieden sein kann und zweiwertige, gegebenenfalls substituierte Kohlenwasserstoffreste bedeutet,
R² gleich oder verschieden sein kann und eine für R angegebe-ne Bedeutung hat,
n 1, 2, 3 oder 4 ist und
x eine ganze Zahl größer oder gleich 1 ist.

Bei den erfindungsgemäßen Massen handelt es sich bevorzugt um einkomponentige, bei Raumtemperatur vulkanisierende Massen (RTV-1-Massen). Diese können je nach Anwendung standfest oder fließfähig sein.

Beispiele für Rest R sind Alkylreste, wie der Methyl-, Ethyl-, n-Propyl-, iso-Propyl-,1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest, Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 18 Kohlenstoffatomen, besonders bevorzugt um Alkylreste, insbesondere um den Ethyl- und den iso-Propylrest.

Beispiele für Rest R¹ sind Alkylenreste, wie der Methylen-, Ethylen-, Propylen-, Methylethylen- und Butylenrest.

Bevorzugt handelt es sich bei Rest R¹ um gegebenenfalls mit Halogenatomen substituierte, zweiwertige Kohlenwasserstoffreste mit 1 bis 4 Kohlenstoffatomen, besonders bevorzugt um den Ethylen-, Methylethylen- und Butylenrest, insbesondere um den Methylethylen- und Ethylenrest.

Beispiele für Rest R² sind die für R angegebenen Beispiele, wobei Alkylreste bevorzugt und Ethyl- und Methylreste besonders bevorzugt sind.

Vorzugsweise handelt es sich bei n um 2, 3 oder 4, insbesondere um 4.

Bevorzugt ist x eine ganze Zahl von 2 bis 12, besonders bevorzugt von 2 bis 4.

Beispiele für die erfindungsgemäß eingesetzten Titanverbindungen der Formel (I) sind
Ti[(OCH₂CH₂)₂₋₁₂-OCH₃]₄,
Ti [(OCH₂CH₂)₂₋₁₂-O-CH₂CH₂CH₂CH₃]₄,
Ti[(OCH(CH₃)CH₂)₂₋₁₂-OCH₃]₄,
Ti[(OCH(CH₃)CH₂))₂₋₁₂-O-CH₂CH₂CH₂CH₃]₄,
Ti(OEt)₂[(OCH₂CH₂)₂₋₁₂-OCH₃]₂ und
Ti(O*i*Pr) [(OCH₂CH₂)₂₋₁₂-OCH₃]₃ mit Et gleich Ethyl- und iPr gleich iso-Propylrest, wobei Ti[(OCH₂CH₂)₂₋₁₂-OCH₃]₄ bevorzugt und
Ti[(OCH₂CH₂)₂₋₄-OCH₃]₄ besonders bevorzugt sind.

Die erfindungsgemäß eingesetzten Titanverbindungen der Formel (I) sind handelsübliche Produkte bzw. können nach an sich bekannten chemischen Verfahren hergestellt werden, wie etwa durch Umsetzung von Ti(OR)₄ mit n H[(OR¹)ₓOR²] unter Abspaltung von n HOR, wobei R, R¹, R², n und x die oben jeweils dafür angegebene Bedeutung haben.

Sowohl Ti(OR)₄ als auch H[(OR¹)ₓOR²] sind handelsübliche Produkte bzw. nach in der Chemie bekannten Verfahren herstellbar.

Die Darstellung der erfindungsgemäßen Katalysatoren ist auch in situ durch direkte Zugabe der Edukte, wie Oligoalkylenoxidalkoholen und von Tetraorganotitanaten Ti(OR)₄ zu den vernetzbaren Organopolysiloxanmassen möglich.

Die erfindungsgemäßen Massen können neben den erfindungsgemäß als Kondensationskatalysatoren eingesetzten Titanverbindungen alle Komponenten enthalten, die auch bisher zur Herstellung von unter Ausschluß von Feuchtigkeit lagerfähigen und bei Zutritt von Feuchtigkeit bei Raumtemperatur vernetzbaren Organopolysiloxanmassen eingesetzt wurden. Bei den hydrolysierbaren Gruppen, welche die eingesetzten, an der Vernetzungsreaktion beteiligten Organosiliciumverbindungen aufweisen, kann es sich um beliebige Gruppen handeln, wie Organyloxygruppen, insbesondere Alkoxyreste, wie Ethoxyreste, Alkoxyethoxyreste und Methoxyreste. Ferner kann es sich bei den Organosiliciumverbindungen sowohl um Siloxane (≡Si-O-Si≡ -Strukturen) als auch um Silcarbane (≡Si-R⁵-Si≡ -Strukturen mit R⁵ gleich einem zweiwertigen, gegebenenfalls substituierten Kohlenwasserstoffrest) oder deren Copolymere handeln, wie etwa Organosiliciumverbindungen der Formel (R³O)₃₋ₐR⁴ₐSI-R⁵-[R⁴₂SiO]_{b}-R⁴₂Si-R⁵-SiR⁴ₐ(OR³)₃₋ₐ, wobei R³, R⁴, a und b die in Formel (II) angegebene Bedeutung haben und R⁵ gleich zweiwertigem, gegebenenfalls substituierten Kohlenwasserstoffrest ist. Hierzu sei beispielsweise auf EP 747 443 A2, Seite 2, Zeilen 42 bis 53 verwiesen.

Bevorzugt handelt es sich bei den erfindungsgemäßen vernetzbaren Organopolysiloxanmassen um solche, die (A) im wesentlichen lineare Diorganopolysiloxane mit mindestens zwei Organyloxyresten an einer jeden Endgruppe, (B) organyloxyfunktionellen Vernetzer mit mindestens drei Organyloxygruppen und/oder deren Teilhydrolysate und (C) Titanverbindung der Formel (I) enthalten.

Bei den erfindungsgemäß eingesetzten Diorganopolysiloxanen mit mindestens zwei Organyloxyresten an einer jeden Endgruppe handelt es sich vorzugsweise um solche der allgemeinen Formeln

(R³O)₃₋ₐR⁴ ₐSiO-[R⁴ ₂SiO]_{b}-SiR⁴ ₐ(OR³)₃₋ₐ (II),

wobei
a 0 oder 1 ist,
R⁴ gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
R³ gleich oder verschieden sein kann und eine für R angegebene Bedeutung hat,
b eine ganze Zahl von 10 bis 10 000, bevorzugt 100 bis 3 000, besonders bevorzugt 400 bis 2 000, ist.

Beispiele für Reste R³ und R⁴ sind die für Rest R oben angegebenen Beispiele.

Bevorzugt handelt es sich bei den Resten R³ und R⁴ unabhängig voneinander um Alkylreste, besonders bevorzugt um Alkylreste mit 1 bis 4 Kohlenstoffatomen, insbesondere um den Methylrest.

Der durchschnittliche Wert für die Zahl b in Formel (II) ist vorzugsweise so gewählt, daß das Organopolysiloxan der Formel (II) eine Viskosität von 1000 bis 2 500 000 mPa^{.}s, besonders bevorzugt von 4000 bis 800 000 mPa^{.}s, jeweils gemessen bei einer Temperatur von 25°C, besitzt.

Obwohl in Formel (II) nich-t angegeben bzw. aus der Bezeichnung Diorganopolysiloxan nicht entnehmbar, können bis zu 10 Molprozent der Diorganosiloxaneinheiten durch andere Siloxaneinheiten, wie R⁴₃SiO_{1/2}-, R⁴SiO_{3/2}- und SiO_{4/2}-Einheiten, ersetzt sein, wobei R⁴ die vorstehend dafür angegebene Bedeutung hat.

Beispiele für die in den erfindungsgemäßen Massen eingesetzten Diorganopolysiloxane mit mindestens zwei Organyloxyresten an einer jeden Endgruppe (A) sind
(MeO)₂MeSiO[SiMe₂O]₂₀₀₋₂₀₀₀SiMe(OMe)₂,
(EtO)₂MeSiO[SiMe₂O]₂₀₀₋₂₀₀₀SiMe(OEt)₂,
(MeO)₂ViSiO[SiMe₂O]₂₀₀₋₂₀₀₀SiVi(OMe)₂,
(EtO)₂ViSiO[SiMe₂O]₂₀₀₋₂₀₀₀SiVi(OEt)₂,
(MeO)₂CapSiO[SiMe₂O]₂₀₀₋₂₀₀₀SiCap(OMe)₂,
(MeO)₂BapSiO[SiMe₂O]₂₀₀₋₂₀₀₀SiBap(OMe)₂ und
(EtO)₂BapSiO[SiMe₂O]₂₀₀₋₂₀₀₀SiBap(OEt)₂.
Weitere Beispiele für Organosiliciumverbindungen, die zur Herstellung der erfindungsgemäßen Massen eingesetzt werden können, sind (MeO)₂MeSi-CH₂CH₂- [SiMe₂O]₂₀₀₋₂₀₀₀SiMe₂-CH₂CH₂-SiMe (OMe)₂ und (EtO)₂MeSi-CH₂CH₂-[SiMe₂O]₂₀₀₋₂₀₀₀SiMe₂-CH₂CH₂-SiMe (OEt)₂, wobei Me Methylrest, Et Ethylrest, Vi Vinylrest, Cap 3-(Cyclohexylamino)propylrest und Bap 3-(n-Butylamino)propylrest bedeutet.

Die in den erfindungsgemäßen Massen eingesetzten Organosiliciumverbindungen mit mindestens zwei Organyloxyresten an einer jeden Endgruppe sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den in den erfindungsgemäßen Massen eingesetzten organyloxyfunktionellen Vernetzern (B) kann es sich um beliebige, bisher bekannte Organyloxyvernetzer handeln, wie beispielsweise Silane oder Siloxane mit mindestens drei Organyloxygruppen.

Bei den in den erfindungsgemäßen Massen eingesetzten Organyloxyvernetzern (B) handelt es sich vorzugsweise um Organosiliciumverbindungen der Formel

(R³O)_{4-c}SiR⁶ _{c} (III),

wobei
R³ gleich oder verschieden sein kann und eine der oben angegebenen Bedeutungen hat,
R⁶ eine oben für R⁴ genannte Bedeutung besitzt und
c 0 oder 1 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (III), wie auch um Teilcohydrolysate, d.h. Teilhydrolysate von mindestens zwei verschiedenen Arten von Organosiliciumverbindungen der Formel (III).

Handelt es sich bei den in den erfindungsgemäßen Massen gegebenenfalls eingesetzten Vernetzern (B) um Teilhydrolysate von Organosiliciumverbindungen der Formel (III), so sind solche mit bis zu 6 Siliciumatomen bevorzugt.

Beispiele für Rest R⁶ sind die oben für Rest R genannten Beispiele, wobei Kohlenwasserstoffreste mit 1 bis 12 Kohlenstoffatomen bevorzugte und der Methyl- und der Vinylrest besonders bevorzugt sind.

Besonders bevorzugt handelt es sich bei den in den erfindungsgemäßen Massen eingesetzten Vernetzern (B) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Aminopropyltrimethoxysilan, 3-Aminopropyltriethoxysilan, 3-Cyanopropyltrimethoxysilan, 3-Cyanopropyltriethoxysilan, 3-(2-Aminoethylamino)propyltrimethoxysilan, 3-(2-Aminoethylamino)propyltriethoxysilan, 3-(N,N-Diethyl-2-aminoethylamino)propyltrimethoxysilan, 3-(N,N-Diethyl-2-aminoethylamino)propyltriethoxysilan, 3-(Cyclohexylamino)propyltrimethoxysilan, 3-(Cyclohexylamino)propyltriethoxysilan, 3-(Glycidoxy)propyltriethoxysilan, l,2-Bis (trimethoxysilyl)ethan, 1,2-Bis(triethoxysilyl)ethan sowie Teilhydrolysate der genannten alkoxyfunktionellen Organosiliciumverbindungen, wie z.B. Hexaethoxydisiloxan.

Die in den erfindungsgemäßen Massen eingesetzten Vernetzer (B) sind handelsübliche Produkte bzw. können nach in der Siliciumchemie bekannten Verfahren hergestellt werden.

Die erfindungsgemäßen Massen enthalten Vernetzer (B) in Mengen von vorzugsweise 0,01 bis 20 Gewichtsteilen, besonders bevorzugt 0,5 bis 10 Gewichtsteilen, insbesondere 1,0 bis 5,0 Gewichtsteilen, jeweils bezogen auf 100 Gewichtsteile Organopolysiloxan (A).

Die erfindungsgemäßen Massen enthalten Kondensationskatalysator (C) in Mengen von vorzugsweise 0,01 bis 10,0 Gewichtsteilen, besonders bevorzugt 0,1 bis 10,0 Gewichtsteilen, insbesondere 0,5 bis 5,0 Gewichtsteilen, jeweils bezogen auf 100 Gewichtsteile Organopolysiloxan (A).

Zusätzlich zu den oben beschriebenen Komponenten (A), (B) und (C) können die erfindungsgemäßen Massen nun weitere Stoffe, wie Weichmacher (D), Füllstoffe (E), Haftvermittler (F) und Additive (G) enthalten, wobei die zusätzlichen Stoffe (D) bis (G) die gleichen sein können, die auch bisher in unter Ausschluß von Feuchtigkeit lagerfähige und bei Zutritt von Feuchtigkeit vernetzbaren Massen eingesetzt worden sind.

Beispiele für Weichmacher (D) sind bei Raumtemperatur flüssige, durch Trimethylsiloxygruppen endblockierte Dimethylpolysiloxane, insbesondere mit Viskositäten im Bereich zwischen 50 und 1000 mPa^{.}s, sowie hochsiedende Kohlenwasserstoffe, wie zum Beispiel Paraffinöle.

Die erfindungsgemäßen Massen enthalten Weichmacher (D) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (E) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (E) eingesetzt werden, handelt es sich bevorzugt um hydrophile pyrogene Kieselsäure und stearinsäurebelegte Kreide.

Die erfindungsgemäßen Massen enthalten Füllstoffe (E) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Organopolysiloxanmassen eingesetzten Haftvermittler (F) sind Silane und Organopolysiloxane mit funktionellen Gruppen, wie beispielsweise solche mit Aminoalkyl-, Glycidoxypropyl- oder Methacryloxypropylresten sowie Tetraalkoxysilane. Falls jedoch bereits eine andere Komponente, wie etwa Siloxan (A) oder Vernetzer (B), die genannten funktionellen Gruppen aufweist, kann auf einen Zusatz von Haftvermittler verzichtet werden.

Die erfindungsgemäßen Massen enthalten Haftvermittler (F) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (G) sind Pigmente, Farbstoffe, Riechstoffe, Fungicide, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, und organischen Lösungsmittel, wie Alkylaromaten.

Die erfindungsgemäßen Massen enthalten Additive (G) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Besonders bevorzugt handelt es sich bei den erfindungsgemäßen Massen um solche, die
(A) Diorganopolysiloxan der Formel (II),
(B) Vernetzer der Formel (III) und/oder deren Teilhydrolysate,
(C) Titanverbindung der Formel (I) und
(E) Füllstoffe
enthalten.

Insbesondere handelt es sich bei den erfindungsgemäßen Massen um solche, die aus
(A) 100 Gewichtsteilen Polydiorganosiloxan der Formel (II),
(B) 1,0 bis 5,0 Gewichtsteilen Vernetzer der Formel (III) und/oder deren Teilhydrolysate,
(C) 0,5 bis 5,0 Gewichtsteilen Titanverbindung der Formel (I),
(D) 0 bis 300 Gewichtsteilen Weichmacher,
(E) 0 bis 300 Gewichtsteilen Füllstoffe,
(F) 0 bis 50 Gewichtsteilen Haftvermittler und
(G) 0 bis 100 Gewichtsteilen Additive
bestehen.

Bei den einzelnen Komponenten der erfindungsgemäßen Massen kann es sich jeweils um eine Art einer solchen Komponente wie auch um ein Gemisch aus mindestens zwei verschiedenen Arten derartiger Komponenten handeln.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35°C bis 135°C.

Die Herstellung der erfindungsgemäßen Organopolysiloxanmassen und deren Lagerung muß unter im wesentlichen wasserfreien Bedingungen erfolgen, da ansonsten die Massen vorzeitig aushärten können.

Für die Vernetzung der erfindungsgemäßen Massen zu Elastomeren reicht der übliche Wassergehalt der Luft aus. Die Vernetzung kann, falls erwünscht, auch bei höheren oder niedrigeren Temperaturen als Raumtemperatur, z.B. bei -5° bis 15°C oder bei 30° bis 50°C durchgeführt werden. Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen vernetzbaren Organopolysiloxanmassen haben den Vorteil, daß sie sich durch eine sehr hohe Lagerstabilität und eine hohe Vernetzungsgeschwindigkeit auszeichnen.

Des weiteren haben die erfindungsgemäßen Organopolysiloxanmassen den Vorteil, daß durch den Einsatz der Titanverbindungen der Formel (I) farblose, transluzente Massen erhalten werden.

Ferner liegt der Vorteil der erfindungsgemäßen Massen in der breiten Variation und Verfügbarkeit der in der Titanverbindung der Formel (I) verwendeten Liganden, die eine Steuerung der Vulkanisationsgeschwindigkeit über die Kettenlänge der Liganden zulassen. Je größer in Formel (I) der Wert für x ist, desto längere Vulkanisationszeiten werden erhalten.

Die erfindungsgemäßen Massen können für alle Verwendungszwecke eingesetzt werden, für die unter Ausschluß von Wasser lagerfähige, bei Zutritt von Wasser bei Raumtemperatur zu Elastomeren vernetzende Organopolysiloxanmassen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Der Weiterreißfestigkeit der Vulkanisate wird nach ISO 34, Methode C bestimmt.
Die Shore-A-Härte wird nach DIN (Deutsche Industrie Norm) 53505-87 bestimmt.
Die Reißfestigkeit wird nach DIN 53504-85-S1 bestimmt. Die Reißdehnung wird nach DIN 53504-85-S1 bestimmt. Der Spannungswert bei 100 % Dehnung wird gemäß DIN 53504-S1 gemessen.

### Beispiel 1

### Katalysatorsynthese:

(K1) : Tetraethoxytitan wird mit vier Äquivalenten Diethylenglykolmonomethylether soweit unter Rühren erhitzt bis vier Äquivalente Ethanol abdestilliert sind. Das Produkt wird quantitativ in guter Reinheit erhalten (¹H-NMR). Die Synthese der Katalysatoren (K2), (K3) und (K4) erfolgt in analoger Weise.
(K1) : Ti(O-CH₂CH₂-O-CH₂CH₂-O-CH₃)₄; leicht gelbe Flüssigkeit; M = 524.
   ¹H-NMR (C₆D₆): δ [ppm] 3.22 (s, 12H, O-CH₃), 3.51, 3.70, 3.77 (tr, 7 Hz, 8 H, CH2), 4.6 (s, br, 8 H, CH₂).
   IR (NaCl): 805 m, 937 m, 1037 s, 1107 vs, 1199 s, 1244 m, 1350 m, 1454 m, 2875 vs, 3464 w.
(K2): Ti[(OCH₂CH₂)ₓ-O-CH₃)₄ mit x ≈ 7; leicht gelbe, viskose Flüssigkeit; M = 1440.
(K3): Ti[(OCH₂CH₂)ₓ-O-CH₃)₄ mit x ≈ 12; leicht gelber amorpher Feststoff, Schmelzpunkt 45°C; M = 2240.
(K4): Ti[(OCH (CH₃) CH₂)ₓ-O-CH₃)₄ mit x ≈ 5; leicht gelbe, viskose Flüssigkeit.

In einem Planetenmischer mit Vakuumausrüstung werden unter Wasserausschluß 55,0 Gewichtsteile eines Polydimethylsiloxans mit -OSi(OCH₃)₂CH₃-Endgruppen, das eine Viskosität von 80000 mPas besitzt, mit 31,0 Gewichtsteilen eines Polydimethylsiloxans mit -OSi(CH3)3-Endgruppen und einer Viskosität von 100 mPas und 4,0 Gewichtsteilen Methyltrimethoxysilan vermischt. Dann werden 8,0 Gewichtsteile pyrogene Kieselsäure mit einer spezifischen Oberfläche nach BET von 150 m²/g eingemischt, zum Schluß 2,6 mmol des Titankatalysators pro 150 g RTV-1-Masse.

Nach Homogenisieren im Vakuum wird der Compound in feuchtigkeitsdichte Gebinde abgefüllt, die ersten 24 Stunden bei Raumtemperatur und anschließend bei 50°C gelagert. Nach der in Tabelle 1 angegebenen Lagerzeit wird anhand von Raupen die Hautbildungszeit (HBZ; Zeit bis zur Ausbildung einer trockenen Oberfläche der Raupe) ermittelt. Die jeweils verwendeten Katalysatoren und die erzielten Ergebnisse sind in Tabelle 1 aufgeführt.

Die Durchvulkanisationszeit einer Masse mit Katalysator K1 betrug für eine 13 mm dicke Schicht weniger als 7 Tage.

**Tabelle 1**

| Beispiel | Katalysator | Lagerung [h] | HBZ | Aussehen |
|---|---|---|---|---|
| 1a | K1 | 24 | 20 min | Transluzent, farblos |
| | | 168 | 35 min | Transluzent, farblos |
| | | 336 | 28 min | Transluzent, farblos |
| 1b | K2 | 24 | 80 min | Milchig, farblos |
| | | 168 | 80 min | Milchig, farblos |
| | | 336 | 80 min | Milchig, farblos |
| 1c | K3 | 24 | 3 h | Milchig, farblos |
| | | 168 | 3 h | Milchig, farblos |
| | | 336 | 3 h | Milchig, farblos |
| 1d | K4 | 24 | 35 min | Transluzent, |
| | | | | farblos |
| | | 168 | 40 min | Transluzent, farblos |
| | | 336 | 50 min | Transluzent, farblos |
| | | 672 | 45 min | Transluzent, farblos |
| | | 1680 | 30 min | Transluzent, farblos |
| h: Stunden | | | | |
| min: Minuten | | | | |

Die Vulkanisationsgeschwindigkeit, gemessen an der Hautbildungszeit (HBZ), kann über die Länge der Oligoalkylenoxidkette (x in Formel (I)) gesteuert werden. Alle Massen und Vulkanisate bleiben farblos und sind lagerstabil.

### Vergleichsbeispiel 1

Die in Beispiel 1 beschriebene Verfahrensweise wird wiederholt mit der Abänderung, daß anstelle der Katalysatoren K1-K4 Diisopropoxy-bis-ethylacetessigester-titanat (käuflich erhältlich unter der Marke TYZOR® DC bei der Du Pont) eingesetzt wird. Die Vulkanisation der RTV-Masse ist ebenfalls gut, aber die Masse ist deutlich gelb gefärbt.

### Beispiel 2 (B2)

In einem Planetenmischer mit Vakuumausrüstung werden unter Wasserausschluß 60,4 Gewichtsteile eines Polydimethylsiloxans mit -OSi(OCH₃)₂CH₃-Endgruppen, das eine Viskosität von 80000 mPas besitzt, mit 24,2 Gewichtsteilen eines Polydimethylsiloxans mit -OSi(CH₃)₃-Endgruppen und einer Viskosität von 100 mPas, 2,0 Gewichtsteilen Vinyltrimethoxysilan und 1,5 Gewichtsteilen Methyltrimethoxysilan vermischt. Dann werden 8,5 Gewichtsteile pyrogene Kieselsäure mit einer BET-Oberfläche von 150 m²/g eingemischt und zum Schluß die so erhaltene Masse mit 1,9 Gewichtsteilen des Titankatalysators Kl, dessen Herstellung in Beispiel 1 beschrieben ist, versetzt. Nach Homogenisieren im Vakuum wird der Compound in feuchtigkeitsdichte Gebinde abgefüllt, die ersten 672 Stunden (4 Wochen) bei Raumtemperatur und anschließend 1344 Stunden (8 Wochen) bei 50°C gelagert. Nach den jeweiligen Lagerzeiten werden anhand von Raupen die Hautbildungszeiten (HBZ; Zeit bis zur Ausbildung einer trockenen Oberfläche der Raupen ermittelt. Sämtlich ermittelte Hautbildungszeiten bewegen sich im Bereich von 25 bis 35 Minuten, die Vulkanisation ist weiterhin gut. Die vernetzbare Masse und die Vulkanisate sind farblos.

Von dem Vulkanisat aus der Masse, die 168 h bei Raumtemperatur gelagert wurde, werden die mechanischen Werte ermittelt. Die Ergebnisse finden sich in Tabelle 2.

### Vergleichsbeispiel 2 (V2)

In einem Planetenmischer mit Vakuumausrüstung werden unter Wasserausschluß 62,1 Gewichtsteile eines Polydimethylsiloxans mit -OSi(OCH₃)₂CH₃-Endgruppen, das eine Viskosität von 80000 mPas besitzt, mit 28,6 Gewichtsteilen eines Polydimethylsiloxans mit -OSi(CH₃)₃-Endgruppen (Viskosität 100 mPas), 1,75 Gewichtsteilen Vinyltrimethoxysilan und 1,75 Gewichtsteilen Methyltrimethoxysilan vermischt. Dann werden 8,5 Gewichtsteile pyrogene Kieselsäure mit einer BET-Oberfläche von 150 m²/g eingemischt und zum Schluß 0,3 Gewichtsteile eines Zinnkondensationskatalysators, erhalten aus der Umsetzung von Dibutylzinndiacetat mit Tetraethylsilikat, hinzugegeben. Nach Homogenisieren im Vakuum wird der Compound in feuchtigkeitsdichte Gebinde abgefüllt. 24 h nach der Herstellung wird anhand von Raupen die Hautbildungszeit (HBZ; Zeit bis zur Ausbildung einer trockenen Oberfläche der Raupen ermittelt. Die vernetzbare Masse und das Vulkanisat sind farblos.

Von dem Vulkanisat werden die mechanischen Werte ermittelt. Die Ergebnisse finden sich in Tabelle 2.

Nach 1 Woche Lagerung bei 50°C vulkanisiert die Masse nicht mehr.

### Beispiel 3 (B3)

In einem Planetenmischer mit Vakuumausrüstung werden unter Wasserausschluß 36,5 Gewichtsteile eines Polydimethylsiloxans mit -OSi(OCH₃)₂CH₃-Endgruppen, das eine Viskosität von 80000 mPas besitzt, mit 18,0 Gewichtsteilen eines Polydimethylsiloxans mit -OSi(CH₃)₃-Endgruppen mit einer Viskosität von 100 mPas, 2,0 Gewichtsteilen Vinyltrimethoxysilan und 1,5 Gewichtsteilen Methyltrimethoxysilan vermischt. Dann werden 5,5 Gewichtsteile pyrogene Kieselsäure mit einer BET-Oberfläche von 150 m²/g und 35,0 Gewichtsteile Kreide (käuflich erhältlich unter der Marke Omya BLR3 der Fa. Omya GmbH, Deutschland) eingemischt und anschließend mit 1,9 Gewichtsteilen des Titankatalysators K1 versetzt, dessen Herstellung in Beispiel 1 beschrieben ist. Nach Homogenisieren im Vakuum wird der Compound in feuchtigkeitsdichte Gebinde abgefüllt, die ersten 672 Stunden (4 Wochen) bei Raumtemperatur und anschließend 1344 Stunden (8 Wochen) bei 50°C gelagert. Nach den jeweiligen Lagerzeiten werden anhand von Raupen die Hautbildungszeiten (HBZ; Zeit bis zur Ausbildung einer trockenen Oberfläche der Raupen ermittelt. Sämtlich ermittelte Hautbildungszeiten bewegen sich im Bereich von 25 bis 35 Minuten, die Vulkanisation ist weiterhin gut. Die vernetzbare Masse und die Vulkanisate zeigen die leicht beige Eigenfarbe des Kreidefüllstoffs.

Von dem Vulkanisat aus der Masse, die 168 h bei Raumtemperatur gelagert wurde, werden die mechanischen Werte ermittelt. Die Ergebnisse finden sich in Tabelle 2.

### Vergleichsbeispiel 3 (V3)

Die in Beispiel 3 beschriebene Verfahrensweise wird wiederholt mit der Abänderung, daß anstelle von Katalysator K1 die äquivalente Menge Diisopropoxy-bis-ethylacetessigester-titanat (käuflich erhältlich unter der Marke TYZOR® DC bei der Du Pont) eingesetzt wird. Die Masse und die Vulkanisate sind deutlich gelb gefärbt. Die mechanischen Werte des Vulkanisats sind in Tabelle 2 aufgeführt.

**Tabelle 2**

| | **B 2** | **V 2** | **B 3** | **V 3** |
|---|---|---|---|---|
| Reißfestigkeit [N/mm²] | 1,2 | 1,1 | 1,6 | 1,3 |
| Reißdehnung [%] | 650 | 540 | 660 | 730 |
| Spannungswert bei 100 % | 0,3 | 0,25 | 0,20 | 0,32 |
| Dehnung [MPa] | | | | |
| Weiterreißfestigkeit [MPa] | 5,4 | 3,4 | 5,2 | 3,9 |
| Shore A-Härte | 21 | 14 | 14 | 17 |

Der erfindungsgemäß eingesetzte Katalysator K1 erlaubt die Herstellung von Vulkanisaten mit guten mechanischen Werten.

### Vergleichsbeispiel 4

Die in Vergleichsbeispiel 3 beschriebene Verfahrensweise wird wiederholt mit der Abänderung, daß anstelle von Diisopropoxy-bis-ethylacetessigester-titanat die äquivalente Menge eines Katalysators, hergestellt aus Isopropoxy-n-butoxy-bis(acetylacetonato)titan (käuflich erhältlich unter der Marke TYZOR® AA-95 bei der Du Pont)und zwei Teilen Diethylenglykolmonomethylether unter Abdestillieren niedrig siedender Alkohole, eingesetzt wird. Die Masse und die Vulkanisate sind deutlich gelb gefärbt.

## Patentansprüche

1. Unter Ausschluß von Feuchtigkeit lagerfähige und bei Zutritt von Feuchtigkeit bei Raumtemperatur vernetzbare Organopolysiloxanmassen auf der Basis von Organosiliciumverbindungen mit mindestens zwei hydrolysierbaren Gruppen, dadurch gekennzeichnet, daß sie als Katalysator mindestens eine
Titanverbindung der Formel
Ti(OR)₄₋ₙ[(OR¹)ₓ-OR²]ₙ (I)
enthalten, wobei
R gleich oder verschieden sein kann und einwertige, gegebenenfalls substituierte Kohlenwasserstoffreste bedeutet,
R¹ gleich oder verschieden sein kann und zweiwertige, gegebenenfalls substituierte Kohlenwasserstoffreste bedeutet,
R² gleich oder verschieden sein kann und eine für R angegebene Bedeutung hat,
n 1, 2, 3 oder 4 ist und
x eine ganze Zahl größer oder gleich 1 ist.

2. Vernetzbare Massen gemäß Anspruch 1, dadurch gekennzeichnet, daß n gleich 4 ist.

3. Vernetzbare Massen gemäß Anspruch 1 oder 2, dadurch gekennzeichnet, daß es sich um solche handelt, die
(A) im wesentlichen lineare Diorganopolysiloxane mit mindestens zwei Organyloxyresten an einer jeden Endgruppe,
(B) organyloxyfunktionellen Vernetzer mit mindestens drei Organyloxygruppen und/oder deren Teilhydrolysate und
(C) Titanverbindung der Formel (I)
enthalten.

4. Vernetzbare Massen gemäß einem oder mehreren der Ansprüche 1 bis 3, dadurch gekennzeichnet, daß es sich um solche handelt, die
(A) Diorganopolysiloxan der Formel (II),
(B) Vernetzer der Formel (III) und/oder deren Teilhydrolysate,
(C) Titanverbindung der Formel (I) und
(E) Füllstoffe
enthalten.

5. Vernetzbare Massen gemäß einem oder mehreren der Ansprüche 1 bis 4, dadurch gekennzeichnet, daß es sich um solche handelt, die aus
(A) 100 Gewichtsteilen Polydiorganosiloxan der Formel (II),
(B) 1,0 bis 5,0 Gewichtsteilen Vernetzer der Formel (III) und/oder deren Teilhydrolysate,
(C) 0,5 bis 5,0 Gewichtsteilen Titanverbindung der Formel (I),
(D) 0 bis 300 Gewichtsteilen Weichmacher,
(E) 0 bis 300 Gewichtsteilen Füllstoffe,
(F) 0 bis 50 Gewichtsteilen Haftvermittler und
(G) 0 bis 100 Gewichtsteilen Additive
bestehen.

6. Formkörper, hergestellt durch Vernetzung der Massen gemäß einem oder mehreren der Ansprüche 1 bis 5.
